# EUROPÄISCHE PATENTSCHRIFT

(11) **EP 3 286 442 B1**
(45) Veröffentlichungstag und Bekanntmachung des Hinweises auf die Patenterteilung: **23.10.2019**
(21) Anmeldenummer: 16713737.1
(22) Anmeldetag: 01.04.2016
(51) Int. Cl.: F16B 13/14

(54) **VERFÜLLSCHEIBE FÜR EINEN STANGENFÖRMIGEN ANKER UND ANORDNUNG MIT EINEM ANKER UND EINER SOLCHEN VERFÜLLSCHEIBE**
FILLING DISK FOR A ROD-SHAPED ARMATURE AND ARRANGEMENT COMPRISING AN ARMATURE AND SUCH A FILLING DISK
DISQUE DE REMPLISSAGE POUR UNE PIÈCE D'ANCRAGE EN FORME DE TIGE ET DISPOSITIF COMPOSÉ D'UNE PIÉCE D'ANCRAGE ET D'UN TEL DISQUE DE REMPLISSAGE

(30) Priorität: 20.04.2015 DE 102015105959
(43) Veröffentlichungstag der Anmeldung: 28.02.2018
(73) Patentinhaber: fischerwerke GmbH & Co. KG, 72178 Waldachtal (DE)
(72) Erfinder: DIXA, Raphael, 72178 Waldachtal (DE)
(86) Internationale Anmeldenummer: PCT/EP2016/000548
(87) Internationale Veröffentlichungsnummer: WO 2016/169633

(56) Entgegenhaltungen:
- EP-B1- 1 239 114
- DE-U1-202010 011 671
- JP-U- S 574 503

## Beschreibung

Die Erfindung betrifft eine Verfüllscheibe für einen stangenförmigen Anker mit den Merkmalen des Oberbegriffs des Anspruchs 1. Des Weiteren betrifft die Erfindung eine Anordnung mit einem Anker und einer solchen Verfüllscheibe.

Stangenförmige Anker können mit einer aushärtbaren Masse in einem Bohroch in einem Ankergrund verankert werden. Die aushärtende Masse ist beispielsweise ein Kunstharzmörtel. Solche Verankerungen werden auch als chemische Befestigungen bezeichnet. Eine andere Befestigungsmöglichkeit ist die Verwendung eines stangenförmigen Ankers, der zur Befestigung in einem Loch in einem Ankergrund aufgespreizt wird, also eines sogenannten Hülsen- oder Bolzenankers. Auch eine Kombination der Befestigungsmöglichkeiten ist bekannt und die Erfindung ist nicht auf die genannten Verankerungen beschränkt. Zu einer in radialer Richtung zur Längsachse eines Ankers spielfreien Befestigung eines Anbauteils ist es möglich, einen Ringspalt in einer Durchgangsöffnung des Anbauteils, durch das der Anker durchtritt, und dem Anker mit einer aushärtbaren Masse zu verfüllen. Das ist beispielsweise dann erforderlich, wenn der Anker durch seismische Aktivität oder bei vibrierenden Maschinen dynamisch belastet wird. Durch das Verfüllen des Ringspalts in der Durchgangsöffnung des Anbauteils, durch das der Anker durchtritt, ist eine Übertragung von Querkräften radial zur Längsachse des Ankers zwischen dem Anbauteil und dem Anker möglich oder jedenfalls verbessert. Als Anbauteil wird ein Bauteil bezeichnet, welches mit einem oder vorzugsweise mehreren Ankern an einem Ankergrund befestigt wird. Der oder die Anker werden in Bohrlöchern im Ankergrund verankert und stehen aus dem Ankergrund vor. Das Anbauteil weist für jeden Anker ein Durchgangsloch auf und wird so angeordnet, dass die aus dem Ankergrund vorstehenden Anker durch die Durchgangslöcher durchtreten. Beispielsweise mit auf die Anker aufgeschraubten Muttern wird das Anbauteil befestigt.

Zum Verfüllen des Ringspalts um einen durch eine Durchgangsöffnung in einem Anbauteil durchtretenden Anker sind sog. Verfüllscheiben bekannt. Eine Verfüllscheibe ist typischerweise eine kreisförmige Lochscheibe mit einem Mittelloch als Durchgangsloch, vergleichbar einer Unterlegscheibe, die im Anschluss an das Anbauteil auf den Anker aufgesetzt und beispielsweise mit einer auf den Anker aufgeschraubten Mutter gegen das Anbauteil gespannt wird. Zwischen der Verfüllscheibe und der Mutter kann eine Unterlegscheibe angeordnet sein. Die Verfüllscheibe weist eine Einfüllöffnung für die aushärtbare Masse auf, die beispielsweise durch einen oder mehrere Kanäle mit dem Durchgangsloch in der Verfüllscheibe, durch das der Anker durchtritt, kommuniziert. Nach der Befestigung des Anbauteils wird eine im Verarbeitungszustand fließfähige, beispielsweise pastöse, aushärtbare Masse unter Druck durch die Einfüllöffnung der Verfüllscheibe eingefüllt. Die aushärtbare Masse fließt in das Durchgangsloch der Verfüllscheibe, wo sie einen den Anker im Durchgangsloch in der Verfüllscheibe umgebenden, ringförmigen Spalt in Umfangsrichtung ausfüllt und aus dem Spalt, dem Schaft des Ankers entlang, in einen Ringspalt gelangt, der den Anker in der Durchgangsöffnung des Anbauteils umgibt, den sie ebenfalls ausfüllt. Nach dem Aushärten der Masse ist das Anbauteil radial auf dem Anker fixiert. Ein Beispiel einer solchen Verfüllscheibe offenbart das Patent EP 1 239 114 B1. Die Verfüllscheibe muss weder kreisförmig sein, sondern kann einen grundsätzlich beliebigen Umriss aufweisen, noch muss sich das Durchgangsloch für den Durchtritt des Ankers in einer Mitte der Verfüllscheibe befinden.

Eine weitere Verfüllscheibe ist aus der JP S57 4503 U bekannt.

Ein Nachteil einer Verfüllscheibe mit einem kreisförmigen Durchgangsloch für den Durchtritt eines Ankers ist, dass die Verfüllscheibe mit ihrer das Durchgangsloch umgebenden Innenwand flächig am Umfang des Ankers anliegen kann und dadurch eine Strömung der aushärtbaren Masse um den Anker in Umfangsrichtung an dieser Stelle verhindert. Das gilt insbesondere für Hülsenanker, deren Schaft an der Durchtrittsstelle durch die Verfüllscheibe typischerweise glattwandig ist. Liegt die Verfüllscheibe mit ihrer Innenwand an der Umfangsstelle an dem durch das Durchgangsloch durchtretenden Anker an, an der ein Einfüllkanal von der Einfüllöffnung zum Durchgangsloch mündet, ist der Einfüllkanal versperrt.

Aufgabe der Erfindung ist, eine Verfüllscheibe der vorstehend erläuterten Art vorzuschlagen, die eine Durchströmung einer aushärtenden Masse von einer Einfüllöffnung der Verfüllscheibe bis in einen einen Anker umgebenden Ringspalt in einer Durchgangsöffnung eines Anbauteils sicherstellt.

Diese Aufgabe wird durch die Merkmale der unabhängigen Ansprüche gelöst. Die erfindungsgemäße Verfüllscheibe mit den Merkmalen des Anspruchs 1 weist ein Durchgangsloch für einen Durchtritt eines Ankers und eine mit dem Durchgangsloch kommunizierende Einfüllöffnung für eine aushärtbare Masse auf. Erfindungsgemäß ist das Durchgangsloch für den Durchtritt des Ankers an einer Stelle, an der es einen kleinsten Querschnitt aufweist, nicht kreisförmig. Mit "kleinstem Querschnitt" ist die Stelle oder der Abschnitt des Durchgangslochs gemeint, in dem ein Inkreis, der die Wandung des Durchgangslochs zumindest an einer Stelle berührt, den kleinsten Durchmesser aufweist. Der Inkreis liegt dabei in einer Radialebene zu einer Mittelachse des Durchgangslochs. Die Mittelachse verläuft durch den Mittelpunkt des Inkreises und ist zur Durchsteckrichtung des Ankers parallel oder mit dieser identisch. Das Durchgangsloch kann sich von seinem kleinsten Querschnitt axial, d.h. entlang der Mittelachse, in einer oder in beiden Richtungen erweitern. Auch ein Durchgangsloch mit gleichbleibendem Querschnitt ist möglich, wobei dieser Querschnitt zugleich auch der kleinste Querschnitt des Durchgangslochs ist. Dadurch, dass das Durchgangsloch nicht kreisförmig ist, ist ein Spalt oder sind mehrere Spalte, die sich zumindest ein Stück weit in einer Umfangsrichtung erstrecken, im Durchgangsloch der Verfüllscheibe um den durch das Durchgangsloch durchtretenden Anker auch dann gewährleistet, wenn das Durchgangsloch der Verfüllscheibe an einer oder mehreren Umfangsstellen am Anker anliegt. Eine unter Druck in einen solchen Spalt strömende aushärtbare Masse strömt in dem Spalt in einer Umfangsrichtung und gelangt dadurch zuverlässig an eine Stelle, an der die aushärtbare Masse in einen Ringspalt zwischen dem Anker und einer Durchgangsöffnung eines Anbauteils eintreten kann, auch wenn die Durchgangsöffnung des Anbauteils an einer Umfangsstelle am Anker anliegt.

Gemäß der Erfindung weist die Verfüllscheibe mindestens einen im Durchgangsloch der Verfüllscheibe von der Innenwand des Durchgangslochs radial nach innen stehenden Abstandshalter auf, der einen Spalt um einen durch das Durchgangsloch durchtretenden Anker beginnend am Abstandshalter in Umfangsrichtung sicherstellt. Mit "nach innen stehend" ist gemeint, dass der Abstandshalter in einen den Querschnitt des Durchgangslochs umschreibenden Umkreis liegt. Der Abstandhalter kann insbesondere radial zur Mittelachse nach innen stehen. Der Spalt reicht vom Abstandshalter in Umfangsrichtung bis zu einem nächsten Abstandshalter oder eine Anlagestelle des Durchgangslochs der Verfüllscheibe am durchtretenden Anker, wenn die Verfüllscheibe mit dem einen Abstandshalter und einem in Umfangsrichtung nächsten Abstandshalter oder mit dem einen Abstandshalter und an einer in Umfangsrichtung beabstandeten Umfangsstelle am Anker anliegt. In diesem sich in Umfangsrichtung erstreckenden Spalt um den Anker im Durchgangsloch der Verfüllscheibe kann die aushärtbare Masse in Umfangsrichtung fließen, so dass ein Umfangsbereich zur Verfügung steht, in dem die aushärtbare Masse aus dem Durchgangsloch in der Verfüllscheibe in die Durchgangsöffnung des Anbauteils, durch die der Anker ebenfalls durchtritt, fließen kann. Eine Ausgestaltung der Erfindung sieht vor, dass sich das Durchgangsloch in der Verfüllscheibe ausgehend von dem mindestens einen Abstandshalter in einer Umfangsrichtung bogenförmig erweitert, d.h. sich der Abstand von der Mittelachse in Umfangsrichtung vergrößert. Dadurch ergibt sich ein bogenförmiger Spalt um den durch das Durchgangsloch durchtretenden Anker, der sich wie ein Keil mit bogenförmiger Schräge in einer Umfangsrichtung erweitert, und in dem die aushärtbare Masse in der Umfangsrichtung fließen kann.

Eine Ausgestaltung der Erfindung sieht einen kreissägeblattförmigen kleinsten Querschnitt des Durchgangslochs der Verfüllscheibe für den Durchtritt des Ankers vor. Bei dieser Ausgestaltung der Erfindung erweitert sich der kleinste Querschnitt des Durchgangslochs ausgehend von einer Kante bogenförmig in einer Umfangsrichtung bis zu einer nächsten Kante, wobei die Kanten im Durchgangsloch nach innen stehende Abstandshalter bilden, die radial oder sekantenartig zur Mittelachse orientiert sind. Es genügen wenige solche Kanten mit sich in Umfangsrichtung anschließenden Bögen, beispielsweise zwei, drei oder vier, u.U. auch nur eine Kante.

Ausgestaltungen der Erfindung sehen ein Durchgangsloch mit einem über die Dicke der Verfüllscheibe gleichbleibenden Querschnitt und/oder eine Verfüllscheibe mit einem über ihre Dicke gleichbleibenden Querschnitt vor. Diese Ausgestaltungen der Erfindung sind kostengünstig beispielsweise durch Stanzen herstellbar.

Eine Ausgestaltung der Erfindung sieht einen von einem Außenumfang der Verfüllscheibe nach innen zum Durchgangsloch durchgehenden Spalt vor. Der Spalt kann beispielsweise radial, in einer Sekantenrichtung oder bogenförmig verlaufen. Eine Mündung des Spalts am Außenumfang der Verfüllscheibe bildet die Einfüllöffnung für die aushärtbare Masse, die durch den Spalt mit dem Durchgangsloch kommuniziert. Ein solcher Spalt ermöglicht ebenfalls eine preisgünstige Herstellung der Verfüllscheibe beispielsweise durch Stanzen.

Eine Ausgestaltung der Erfindung sieht einen Einfüllkanal in der Verfüllscheibe vor, der von der Einfüllöffnung zum Durchgangsloch für den Durchtritt des Ankers durch die Verfüllscheibe führt. Im Durchgangsloch weist die Verfüllscheibe mindestens einen nach innen stehenden Abstandshalter auf, der einen Spalt im Durchgangsloch um den durch das Durchgangsloch durchtretenden Anker sicherstellt. Der Spalt erstreckt sich ausgehend von einer Mündung des Einfüllkanals in das Durchgangsloch der Verfüllscheibe ein Stück weit in einer Umfangsrichtung.

Eine Ausgestaltung der Erfindung sieht eine Kombination der Verfüllscheibe mit einer gleich großen Lochscheibe vor, die auf einer dem Anbauteil abgewandten Seite der Verfüllscheibe angeordnet ist bzw. wird. "Gleichmäßig" bezieht sich hier insbesondere auf den Umriss und/oder den Außendurchmesser der Scheiben. Die Lochscheibe ist insbesondere eine Unterlegscheibe, deren Innendurchmesser zum Durchmesser des Ankers korrespondiert, derart, dass die Lochscheibe den Spalt zwischen der Verfüllscheibe und dem Anker im Wesentlichen abdeckt und einem Austritt der aushärtbaren Masse auf einer dem Anbauteil abgewandten Seite entgegenwirkt.

Damit die Einfüllöffnung, wenn sie an einem Außenumfang der Verfüllscheibe angeordnet ist, gut zum Ansetzen einer Einfülldüse zum Einbringen der aushärtbaren Masse in das Durchgangsloch zugänglich ist, sieht eine Ausgestaltung der Erfindung eine schrägstehende Einfüllöffnung an einem Außenumfang der Verfüllscheibe vor. "Schrägstehend" bedeutet, dass ein die Einfüllöffnung begrenzender Rand weder parallel noch normal zur Mittelachse, sondern in einem Winkel dazwischen verläuft. Eine Einfülldüse kann dadurch einfach schräg zur Mittelachse an der Einfüllöffnung angesetzt bzw. auf ihren Rand aufgesetzt werden.

Die erfindungsgemäße Anordnung mit den Merkmalen des Anspruchs 10 weist eine Verfüllscheibe der vorstehend erläuterten Art und einen Anker auf, der in einem Ankergrund verankert ist und durch das Durchgangsloch der Verfüllscheibe durchtritt. Die Anordnung mit den Merkmalen des Anspruchs 11 sieht vor, dass ein durch das Durchgangsloch der Verfüllscheibe durchtretender Anker im Durchgangsloch glattwandig ist, d.h. der Anker weist im Durchgangsloch insbesondere kein Außengewinde, das an der Innenwand der Verfüllscheibe anliegen kann. Ein im Durchgangsloch einer Verfüllscheibe glattwandiger Anker versperrt einen ihn im Durchgangsloch der Verfüllscheibe umgebenden ringförmigen Spalt, wenn die Verfüllscheibe an einer Umfangsstelle des Durchgangslochs flächig am Anker anliegt. Die erfindungsgemäße Verfüllscheibe verhindert das. Ist der Anker im Durchgangsloch nicht glattwandig, sondern weist dort beispielsweise ein Gewinde auf, ist die Gefahr eines Versperrens des Spalts im Durchgangsloch geringer, weil die Verfüllmasse durch Gewindegänge des Gewindes fließen kann.

Die Erfindung wird nachfolgend anhand von drei Ausführungsbeispielen näher erläutert. Es zeigen:
- Figur 1: eine Ansicht einer erfindungsgemäßen Verfüllscheibe;
- Figur 2: die Verfüllscheibe aus Figur 1 in perspektivischer Darstellung;
- Figur 3: eine Anordnung mit der Verfüllscheibe aus den Figuren 1 und 2 gemäß der Erfindung in einem Achsschnitt;
- Figur 4: ein zweites Ausführungsbeispiel einer erfindungsgemäßen Verfüllscheibe in einer Ansicht; und
- Figur 5: ein drittes Ausführungsbeispiel einer erfindungsgemäßen Verfüllscheibe in einer Ansicht.

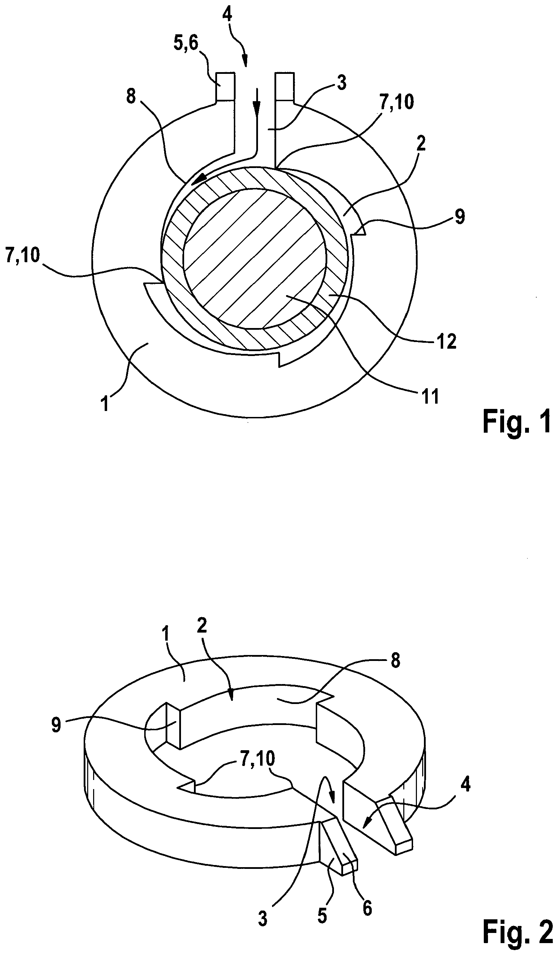

Die in Figuren 1 und 2 gezeigte, erfindungsgemäße Verfüllscheibe 1 weist die Form einer Lochscheibe mit kreisförmigem Außenumfang und einem Durchgangsloch 2 in ihrer Mitte auf. An einer Stelle ihres Umfangs weist die Verfüllscheibe 1 einen radial vom Außenumfang zum Durchgangsloch 2 durchgehenden Spalt 3 auf, dessen äußeres Ende bzw. äußere Mündung eine Einfüllöffnung 4 für eine aushärtbare Masse wie beispielsweise einen Kunstharzmörtel bildet. Durch den Spalt 3 kommuniziert die Einfüllöffnung 4 mit dem Durchgangsloch 2. Beiderseits des Spalts 3 weist die Verfüllscheibe 1 nach außen abstehende, in Seitenansicht (vgl. Figur 2) abgeschrägte Vorsprünge 5 auf, deren schräge Ränder 6 die Einfüllöffnung 4 seitlich begrenzen. Die Einfüllöffnung 4 kann aufgrund ihrer schräg in einem Winkel von beispielsweise 45° zu einer axialen Richtung der Verfüllscheibe 1 verlaufenden Ränder 6 auch als schrägstehend aufgefasst werden.

Das Durchgangsloch 2 der Verfüllscheibe 1 ist sägezahnförmig, es weist über einen Umfang verteilt Kanten 7 auf, von denen ausgehend sich das Durchgangsloch 2 in einer Umfangsrichtung bogenförmig erweitert. Die bogenförmigen Erweiterungen 8 des Durchgangslochs 2 enden an einer in Umfangsrichtung nächsten Kante 7, an der das Durchgangsloch 2 mit einer radialen Stufe 9 vom äußeren Ende der bogenförmigen Erweiterung 8 nach innen zu einem inneren Ende einer nächsten bogenförmigen Erweiterung 8 übergeht. Die nach innen stehenden Kanten 7 können auch als Abstandshalter 10 aufgefasst werden, die im Durchgangsloch 2 der Verfüllscheibe 1 nach innen stehen. Eine der Kanten 7 befindet sich an einer Seite des Spalts 3, durch den die Einfüllöffnung 4 mit dem Durchgangsloch 2 kommuniziert. Auf einer gegenüberliegenden Seite mündet der Spalt 3 in eine sich in einer Umfangsrichtung anschließende bogenförmige Erweiterung 8 des Durchgangslochs 2. Im Ausführungsbeispiel weist die Verfüllscheibe 1 vier Kanten 7 bzw. Abstandshalter 10 und entsprechend vier bogenförmige Erweiterung 8 auf. Die Anzahl ist nicht zwingend, die Verfüllscheibe 1 kann auch mehr oder weniger Kanten 7, Abstandshalter 10 und bogenförmige Erweiterung 8 aufweisen. Auch eine Bogenform der Erweiterung 8 ist nicht zwingend für die Erfindung. Es ist mindestens eine Kante 7 bzw. ein Abstandshalter 10 vorhanden, die/der sicherstellt, dass der Spalt 3 mindestens in einer Umfangsrichtung offen in das Durchgangsloch 2 mündet und nicht von einem durch das Durchgangsloch 2 durchtretenden Anker versperrt ist, wenn die Verfüllscheibe 1 im Bereich des Spalts 3 am Anker anliegt.

Durch das Durchgangsloch 2 der Verfüllscheibe 1 tritt ein Hülsenanker 11 mit einer Ankerhülse 12 durch. Nachfolgend wird vereinfachend nur von einem Anker 11 gesprochen, wobei die Ankerhülse 12 gemeint ist, wenn der Anker 11 eine solche innerhalb der Verfüllscheibe 1 aufweist, ansonsten der Anker 11. Der Anker 11 weist Spiel im Durchgangsloch 2 auf, d.h. ein Durchmesser des Ankers 11 ist kleiner als ein Abstand gegenüberliegender Kanten 7 der Verfüllscheibe 1. In Figur 1 ist die Verfüllscheibe 1 exzentrisch auf dem Anker 11 gezeichnet, sie liegt mit zwei der Abstandshalter 10 bildenden Kanten 7 am Anker 11 an. Gezeichnet ist der ungünstige Fall, dass der Anker 11 an der Kante 7 anliegt, an der der Spalt 3 mündet. Wie zu sehen, halten die die Abstandshalter 10 bildenden Kanten 7 eine sich in einer Umfangsrichtung an den Spalt 3 anschließende bogenförmige Erweiterung 8 offen, so dass eine aushärtbare Masse, die durch die Einfüllöffnung 4 eingefüllt wird, durch den Spalt 3 wie mit dem Mehrfachpfeil angedeutet, in die bogenförmige Erweiterung 8 fließt.

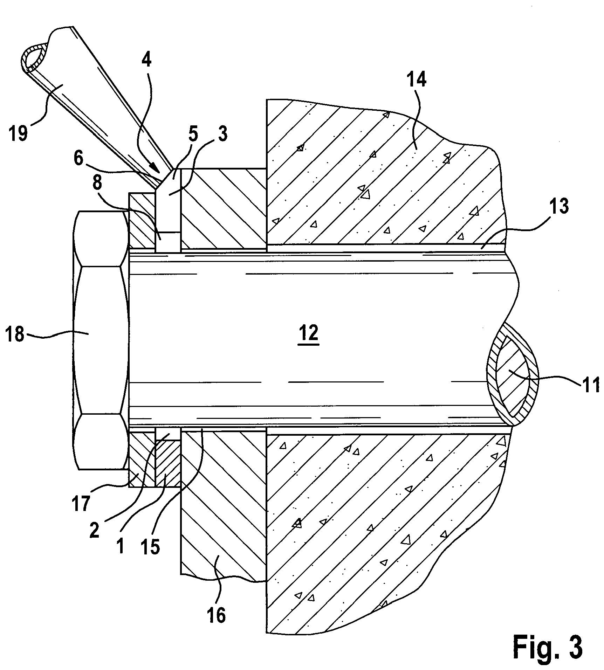

Figur 3 zeigt eine erfindungsgemäße Anordnung mit dem Anker 11, der in einem Bohrloch 13 in einem Ankergrund 14 aus beispielsweise Beton, Stein oder Mauerwerk verankert ist. Dargestellt ist ein Hülsenanker 11 mit einer glattwandigen Ankerhülse 12, der im Bohrloch 13 aufgespreizt und dadurch im Ankergrund 14 verankert ist. Es sind auch andere Anker 11 möglich, beispielsweise Bolzenanker, die in ihrem hinteren Bereich ein Gewinde aufweisen, oder mit einer aushärtbaren Masse, beispielsweise einem Kunstharzmörtel, im Bohrloch 13 im Ankergrund 14 verankerte Anker bzw. Ankerstangen (nicht dargestellt). Der Anker 11 steht aus dem Ankergrund 14 vor und durchsetzt eine Durchgangsöffnung 15 eines Anbauteils 16, die erfindungsgemäße Verfüllscheibe 1 und eine herkömmliche Lochscheibe als Unterlegscheibe 17, die in genannter Reihenfolge auf den Anker 11 aufgesetzt sind. Eine in den Anker 11 eingedrehte Schraube 18 spannt über die Unterlegscheibe 17 und die Verfüllscheibe 1 das Anbauteil 16 gegen den Ankergrund 14. Zum Verfüllen eines den Anker 11 bzw. seine Ankerhülse 12 in der Durchgangsöffnung 15 des Anbauteils 16 umgebenden Ringspalts wird eine Düse 19 an der Einfüllöffnung 4 der Verfüllscheibe 1 angesetzt und eine aushärtbare Masse unter Druck eingefüllt. Aufgrund der schräg verlaufenden Ränder 6 der Einfüllöffnung 4 ist die Düse 19 schräg zu einer Oberfläche des Ankergrunds 14 gut an der Einfüllöffnung 4 ansetzbar. Die aushärtbare Masse fließt durch den Spalt 3 in das Durchgangsloch 2 der Verfüllscheibe 1. Selbst wenn im ungünstigen Fall die Verfüllscheibe 1 mit der Kante 7 an der Ankerhülse 12 des Ankers 11 anliegt, die sich an der einen Seite des Spalts 3 befindet, fließt die aushärtbare Masse auf der gegenüberliegenden Seite des Spalts 3 in Umfangsrichtung in die sich anschließende bogenförmige Erweiterung 8 des Durchgangslochs 2. Die bogenförmige Erweiterung 8 erstreckt sich ausreichend weit in Umfangsrichtung um sicherzustellen, dass die sie durchfließende aushärtbare Masse in die Durchgangsöffnung 15 im Anbauteil 16 fließen kann, selbst wenn die Durchgangsöffnung 15 des Anbauteils 16 ebenfalls an der Umfangsstelle an der Ankerhülse 12 des Ankers 11 anliegt, an der sich der Spalt 3 der Verfüllscheibe 1 befindet, durch den die aushärtbare Masse einfließt. Das Durchgangsloch 2 der Verfüllscheibe 1 mit den Kanten 7, die die nach innen stehenden Abstandshalter 10 bilden, und den bogenförmigen Erweiterungen 8, stellt sicher, dass die durch die Einfüllöffnung 4 eingefüllte aushärtbare Masse in die Durchgangsöffnung 15 des Anbauteils 16 gelangt und den die Ankerhülse 12 des Ankers 11 in der Durchgangöffnung 15 des Anbauteils 16 umgebenden Ringspalt verfüllt, so dass nach Aushärten der Masse das Anbauteil 16 in radialer Richtung zum Anker 11 spielfrei auf dem Anker 11 bzw. seiner Ankerhülse 12 gehalten ist. Die Unterlegscheibe 17 deckt die Verfüllscheibe 1 auf einer dem Anbauteil 16 abgewandten Seite ab und vermeidet oder jedenfalls begrenzt einen Austritt aushärtbarer Masse auf dieser Seite.

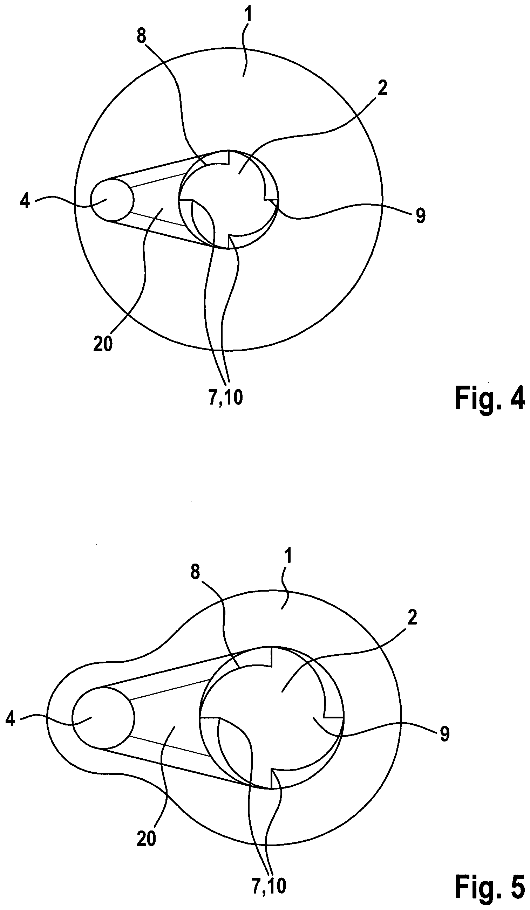

Bei der nachfolgenden Erläuterung der Figuren 4 und 5 werden im Wesentlichen nur die Unterschiede zu Figuren 1 und 2 erläutert und ergänzend die vorstehenden Erläuterungen in Bezug genommen. Mit Figuren 1 und 2 übereinstimmende Elemente sind in Figuren 4 und 5 mit den gleichen Bezugszahlen wie in Figuren 1 und 2 versehen. In Figuren 4 und 5 ist jeweils eine Unterseite der Verfüllscheibe 1 gezeigt, wobei als "Unterseite" die Stirnseite bezeichnet wird, die zur Anlage an dem Anbauteil 16 vorgesehen ist.

Die Verfüllscheibe 1 aus Figur 4 ist kreisförmig, die Verfüllscheibe 1 aus Figur 5 schlüssellochförmig. Beide Verfüllscheiben 1 weisen ein Durchgangsloch 2 in ihrer Mitte auf, das für den Durchtritt eines Ankers vorgesehen ist und das dieselbe, kreissägeblattförmige Form aufweist wie das Durchgangsloch 2 der Verfüllscheibe 1 aus den Figuren 1 und 2. Wie das Durchgangsloch 2 aus den Figuren 1 und 2 weisen die Durchgangslöcher 2 aus den Figuren 4 und 5 über ihren Umfang verteilt angeordnete, nach innen gerichtete Kanten 7 auf, die im Durchgangsloch 2 nach innen stehende Abstandshalter 10 bilden, und die sich in einer Umfangsrichtung an die Kanten 7 anschließenden, bogenförmigen Erweiterungen 8, auf. Im Unterschied zu den Figuren 1 und 2 weist das Durchgangsloch 2 der Verfüllscheibe 1 aus den Figuren 4 und 5 nicht über eine gesamte Dicke der Verfüllscheibe 1 einen gleichbleibenden, kreissägeblattförmigen Querschnitt auf, sondern das Durchgangsloch 2 erweitert sich auf der Unterseite der Verfüllscheibe 1 zu einem kreisförmigen Loch, dessen Durchmesser einem Abstand der äußeren Enden der bogenförmigen Erweiterungen 8 entspricht. In den Figuren 4 und 5 weist das Durchgangsloch 2 also nur an seinem kleinsten Querschnitt die Kreissägeblattform auf, mit den Kanten 7 als engster Stelle. Seitlich an dem kreisförmigen Teil des Durchgangslochs 2 schließt sich ein Einfüllkanal 20 an, der nicht die gesamte Dicke der Verfüllscheibe 1 einnimmt, sondern an einer Oberseite der Verfüllscheibe 1 geschlossen ist. An einem äußeren Ende mündet eine Einfüllöffnung 4 achsparallel in den Einfüllkanal 20, durch den die Einfüllöffnung 4 mit dem Durchgangsloch 2 kommuniziert. In Figuren 4 und 5 verläuft die Einfüllöffnung 4 achsparallel, ist also auf einer Stirnseite der Verfüllscheibe 1 anstatt am Umfang zugänglich. Im Ausführungsbeispiel erweitert sich der Einfüllkanal 20 von einem Durchmesser der Einfüllöffnung 4 auf den Durchmesser des kreisförmigen Teils des Durchgangslochs 2. In Figur 4 ist eine zugehörige, nicht gezeichnete Unterlegscheibe, die auf der dem Betrachter abgewandten Oberseite der Verfüllscheibe 1 angeordnet wird, so klein, dass die Einfüllöffnung 4 frei bleibt.

### Bezuaszeichenliste

### Verfüllscheibe für einen stangenförmigen Anker und Anordnung mit einem Anker und einer solchen Verfüllscheibe

- 1: Verfüllscheibe
- 2: Durchgangsloch
- 3: Spalt
- 4: Einfüllöffnung
- 5: Vorsprung
- 6: Rand
- 7: Kante
- 8: bogenförmige Erweiterung
- 9: Stufe
- 10: Abstandshalter
- 11: Anker
- 12: Ankerhülse
- 13: Bohrloch
- 14: Ankergrund
- 15: Durchgangsöffnung
- 16: Anbauteil
- 17: Unterlegscheibe
- 18: Schraube
- 19: Düse
- 20: Einfüllkanal

## Patentansprüche

1. Verfüllscheibe für einen stangenförmigen, in einem Bohrloch (13) in einem Ankergrund (14) verankerbaren Anker (11, 12), wobei die Verfüllscheibe (1) ein Durchgangsloch (2) für einen Durchtritt des Ankers (11, 12) und eine mit dem Durchgangsloch (2) kommunizierende Einfüllöffnung (4) für eine aushärtende Masse aufweist, **dadurch gekennzeichnet, dass** das Durchgangsloch (2) an einer Stelle, an der es einen kleinsten Querschnitt aufweist, nicht kreisförmig ist und dass das Durchgangsloch (2) mindestens einen nach innen stehenden Abstandshalter (10) aufweist.

2. Verfüllscheibe nach Anspruch 1, **dadurch gekennzeichnet, dass** sich das Durchgangsloch (2) ausgehend von dem Abstandshalter (10) in einer Umfangsrichtung bogenförmig erweitert.

3. Verfüllscheibe nach einem der vorhergehenden Ansprüche, **dadurch gekennzeichnet, dass** der kleinste Querschnitt des Durchgangslochs (2) der Verfüllscheibe (1) für den Durchtritt des Ankers (11, 12) kreissägeblattförmig ist.

4. Verfüllscheibe nach einem der vorhergehenden Ansprüche, **dadurch gekennzeichnet, dass** das Durchgangsloch (2) der Verfüllscheibe (1) für den Durchtritt des Ankers (11, 12) einen über eine Dicke der Verfüllscheibe (1) gleichbleibenden Querschnitt aufweist.

5. Verfüllscheibe nach einem der vorhergehenden Ansprüche, **dadurch gekennzeichnet, dass** die Verfüllscheibe (1) über ihre Dicke einen gleichbleibenden Querschnitt aufweist.

6. Verfüllscheibe nach einem der vorhergehenden Ansprüche, **dadurch gekennzeichnet, dass** die Verfüllscheibe (1) einen von außen nach innen durchgehenden Spalt (3) aufweist, der in das Durchgangsloch (2) der Verfüllscheibe (1) für den Durchtritt des Ankers (11, 12) mündet und dessen äußeres Ende die durch den Spalt (3) mit dem Durchgangsloch (2) kommunizierende Einfüllöffnung (4) für die aushärtende Masse bildet.

7. Verfüllscheibe nach einem der Ansprüche 1 - 6, **dadurch gekennzeichnet, dass** in der Verfüllscheibe (1) ein Einfüllkanal (20) von der Einfüllöffnung (4) zum Durchgangsloch (2) der Verfüllscheibe (1) für den Durchtritt des Ankers (11, 12) führt und dass die Verfüllscheibe (1) in dem Durchgangsloch (2) mindestens einen nach innen stehenden Abstandshalter (10) aufweist, der einen Spalt zwischen dem Durchgangsloch (2) der Verfüllscheibe (1) und einem durch das Durchgangsloch (2) durchtretenden Anker (11, 12) sicherstellt, der sich ausgehend vom Einfüllkanal (20) ein Stück weit in einer Umfangsrichtung erstreckt.

8. Verfüllscheibe nach einem der vorhergehenden Ansprüche, **dadurch gekennzeichnet, dass** die Verfüllscheibe (1) eine an ihr anliegende Unterlegscheibe (17) mit gleichem Außenumfang aufweist.

9. Verfüllscheibe nach einem der vorhergehenden Ansprüche, **dadurch gekennzeichnet, dass** die Verfüllscheibe (1) eine schräg stehende Einfüllöffnung (4) an ihrem Außenumfang aufweist.

10. Anordnung mit einer Verfüllscheibe (1) nach einem der vorhergehenden Ansprüche und mit einem durch das Durchgangsloch (2) der Verfüllscheibe (1) durchtretenden und in einem Ankergrund (14) verankerten Anker (11, 12).

11. Anordnung mit einer Verfüllscheibe (1) nach einem der vorhergehenden Ansprüche und einem durch das Durchgangsloch (2) der Verfüllscheibe (1) durchtretenden Anker (11, 12), **dadurch gekennzeichnet, dass** der Anker (11) oder eine Ankerhülse (12) im Durchgangsloch (2) glattwandig ist.

## Claims

1. Filling disc for a rod-shaped anchor (11, 12) which is anchorable in a drilled hole (13) in an anchoring substrate (14), the filling disc (1) having a through-hole (2) for passage of the anchor (11, 12) and an introduction opening (4) for a curing composition, which opening communicates with the through-hole (2), **characterised in that** the through-hole (2) is not circular at a location at which it has a smallest cross-section, and the through-hole (2) has at least one inwardly projecting spacer (10).

2. Filling disc according to claim 1, **characterised in that** the through-hole (2), starting from the spacer (10), widens arcuately in a circumferential direction.

3. Filling disc according to either one of the preceding claims, **characterised in that** the smallest cross-section of the through-hole (2) of the filling disc (1) for the passage of the anchor (11, 12) is circular-sawblade-shaped.

4. Filling disc according to any one of the preceding claims, **characterised in that** the through-hole (2) of the filling disc (1) for the passage of the anchor (11, 12) has a cross-section that is constant over a thickness of the filling disc (1).

5. Filling disc according to any one of the preceding claims, **characterised in that** the filling disc (1) has a cross-section that is constant over its thickness.

6. Filling disc according to any one of the preceding claims, **characterised in that** the filling disc (1) has a gap (3) running through from the outside to the inside, which gap leads into the through-hole (2) of the filling disc (1) for the passage of the anchor (11, 12) and the outer end of which forms the introduction opening (4) for the curing composition, which opening communicates with the through-hole (2) by way of the gap (3).

7. Filling disc according to any one of claims 1 to 6, **characterised in that** in the filling disc (1) an introduction channel (20) leads from the introduction opening (4) to the through-hole (2) of the filling disc (1) for the passage of the anchor (11, 12), and the filling disc (1) has in the through-hole (2) at least one inwardly projecting spacer (1) which ensures there is a gap between the through-hole (2) of the filling disc (1) and an anchor (11, 12) passing through the through-hole (2), which gap, starting from the introduction channel (20), extends a certain distance in a circumferential direction.

8. Filling disc according to any one of the preceding claims, **characterised in that** the filling disc (1) has a washer (17) of the same external diameter, which is in contact with the filling disc.

9. Filling disc according to any one of the preceding claims, **characterised in that** the filling disc (1) has a sloping introduction opening (4) on its outer periphery.

10. Arrangement having a filling disc (1) according to any one of the preceding claims and having an anchor (11, 12) which passes through the through-hole (2) of the filling disc (1) and is anchored in an anchoring substrate (14).

11. Arrangement having a filling disc (1) according to any one of the preceding claims and an anchor (11, 12) which passes through the through-hole (2) of the filling disc (1), **characterised in that** the anchor (11) or an anchor sleeve (12) is smooth-walled in the through-hole (2).

## Revendications

1. Disque de remplissage dévolu à une pièce d'ancrage (11, 12) en forme de tige, pouvant être bloquée à demeure dans un trou foré (13) pratiqué dans une base d'ancrage (14), ledit disque de remplissage (1) comportant un trou traversant (2) dédié à un passage de ladite pièce d'ancrage (11, 12), et un orifice de remplissage (4) qui communique avec ledit trou traversant (2) et est destiné à une masse durcissante, **caractérisé par le fait que** le trou traversant (2) n'est pas circulaire en un emplacement auquel il présente une section transversale minimale ; et **par le fait que** ledit trou traversant (2) est muni d'au moins un élément d'espacement (10) implanté vers l'intérieur.

2. Disque de remplissage selon la revendication 1, **caractérisé par le fait que** le trou traversant (2) s'élargit en arc de cercle, dans une direction périphérique, à partir de l'élément d'espacement (10).

3. Disque de remplissage selon l'une des revendications précédentes, **caractérisé par le fait que** la section transversale minimale du trou traversant (2) dudit disque de remplissage (1), dédié au passage de la pièce d'ancrage (11, 12), revêt la forme d'une lame de scie circulaire.

4. Disque de remplissage selon l'une des revendications précédentes, **caractérisé par le fait que** le trou traversant (2) dudit disque de remplissage (1), dédié au passage de la pièce d'ancrage (11, 12), présente une section transversale constante sur une épaisseur dudit disque de remplissage (1).

5. Disque de remplissage selon l'une des revendications précédentes, **caractérisé par le fait que** ledit disque de remplissage (1) présente une section transversale constante sur son épaisseur.

6. Disque de remplissage selon l'une des revendications précédentes, **caractérisé par le fait que** ledit disque de remplissage (1) comporte un interstice (3) ininterrompu de l'extérieur vers l'intérieur, qui débouche dans le trou traversant (2) dudit disque de remplissage (1), dédié au passage de la pièce d'ancrage (11, 12), et dont l'extrémité extérieure forme l'orifice de remplissage (4) destiné à la masse durcissante et communiquant avec ledit trou traversant (2) par l'intermédiaire dudit interstice (3).

7. Disque de remplissage selon l'une des revendications 1-6, **caractérisé par le fait que**, dans ledit disque de remplissage (1), un canal de remplissage (20) partant de l'orifice de remplissage (4) gagne le trou traversant (2) dudit disque de remplissage (1), dédié au passage de la pièce d'ancrage (11, 12); et **par le fait que** ledit disque de remplissage (1) est muni, dans ledit trou traversant (2), d'au moins un élément d'espacement (10) qui est implanté vers l'intérieur et réserve, entre le trou traversant (2) dudit disque de remplissage (1) et une pièce d'ancrage (11, 12) franchissant ledit trou traversant (2), un interstice s'étendant d'une certaine distance, dans une direction périphérique, à partir du canal de remplissage (20).

8. Disque de remplissage selon l'une des revendications précédentes, **caractérisé par le fait que** ledit disque de remplissage (1) est pourvu d'une rondelle de calage (17) en applique contre ledit disque, et présentant le même pourtour extérieur.

9. Disque de remplissage selon l'une des revendications précédentes, **caractérisé par le fait que** ledit disque de remplissage (1) est muni, sur son pourtour extérieur, d'un orifice de remplissage (4) pratiqué à l'oblique.

10. Agencement comprenant un disque de remplissage (1) conforme à l'une des revendications précédentes, et une pièce d'ancrage (11, 12) qui franchit le trou traversant (2) dudit disque de remplissage (1) et est bloquée à demeure dans une base d'ancrage (14).

11. Agencement comprenant un disque de remplissage (1) conforme à l'une des revendications précédentes, et une pièce d'ancrage (11, 12) qui franchit le trou traversant (2) dudit disque de remplissage (1), **caractérisé par le fait que** la pièce d'ancrage (11), ou une douille d'ancrage (12), présente une paroi lisse dans le trou traversant (2).
